# EUROPEAN PATENT APPLICATION

(11) **EP 2 509 289 A1**
(43) Date of publication of application: **10.10.2012**
(21) Application number: 10834438.3
(22) Date of filing: 06.10.2010
(51) Int. Cl.: H04M 1/247, G06F 3/041, H04M 1/00

(54) **MOBILE TERMINAL DEVICE AND MOBILE TERMINAL DEVICE FUNCTION SETTING METHOD**

(30) Priority: 02.12.2009 JP 2009274891
(71) Applicant: NEC Corporation, Tokyo 108-8001 (JP)
(72) Inventor: HASEGAWA, Motoyoshi, Kodama-gun Saitama 367-0297 (JP)
(74) Representative: Vossius & Partner
(86) International application number: PCT/JP2010/067991
(87) International publication number: WO 2011/067985

(57) **Abstract**

A mobile terminal device according to this invention includes: a display unit for displaying a function button to which a predetermined function is assigned; and a control unit for executing the predetermined function assigned to the function button after a time period equal to or longer than a fixed time period has elapsed with the function button being selected.

## Description

### Technical Field

This invention relates to a mobile terminal device which enable setting of a function and a function setting method for a mobile terminal device.

### Background Art

Up to now, there are proposed various kinds of mobile terminal device capable of setting a function therein.

For example, a mobile terminal device described in Japanese Unexamined Patent Application Publication (JP-A) No. 2003-298715 (hereinafter, referred to as "Patent Document 1") includes a main display unit, a cursor key, and a decision key, and operates as follows. The main display unit displays a vibrator setting notification icon. When the cursor key selects the vibrator setting notification icon displayed on the main display unit, the main display unit displays a vibrator setting menu. The cursor key selects a setting content within the vibrator setting menu displayed on the main display unit. The decision key decides the selected setting content. With this configuration, a function setting menu is called to perform function setting.

Further, a mobile terminal device described in Japanese Unexamined Patent Application Publication (JP-A) No. 2004-334315 (hereinafter, referred to as "Patent Document 2") includes a display device and a touchpad, and operates as follows. The display device displays an operation screen. When a finger is touching the touchpad, the touchpad selects a function displayed on the operation screen. When there is a transition from a state in which the finger is touching the touchpad to a state in which the finger is not touching the touchpad, the functions selected on the operation screen is executed. This configuration improves operability in selecting and executing a function.

It is sometimes desired that on/off or setting of a function of the mobile terminal device be changed quickly. In order to handle such a case, a shortcut function is provided. In a case where the mobile terminal device having the shortcut function has a setting value for a function for which a shortcut is set, there are two implementation methods. One of the implementation methods is a method of providing a shortcut to the function setting menu. The other implementation method is a shortcut used to perform the on/off of the function in a state of the setting value set in the function setting menu.

Each of those methods has a problem. In the former method, the function setting menu always needs to be operated in order to perform function on/off, which requires time and labor before function execution. In the case of the latter method, to change the setting value that is currently set, it is necessary to navigate through the menu to reach a page for performing the setting of the corresponding function, which also requires time and labor.

The same applies to the mobile terminal devices described in Patent Document 1 and Patent Document 2, when performing the on/off or setting of the function of the mobile terminal device, it requires time and labor to reach a target function setting menu.

As described above, up to now, changing the on/off or setting of the function of the mobile terminal device requires time and labor, and hence it is difficult to handle the case where it is desired to quickly change the on/off or setting of the function of the mobile terminal device.

### Summary of the Invention

Therefore, an object of this invention is to provide a mobile terminal device, a function setting method for a mobile terminal device, and a recording medium having a mobile terminal device function setting program recorded thereon, which allow on/off or setting of a function of a mobile terminal device to be changed with a small number of operations.

A mobile terminal device according to a first exemplary aspect of this invention includes: a display unit for displaying a function button to which a predetermined function is assigned; and a control unit for executing the predetermined function assigned to the function button after a time period equal to or longer than a fixed time period has elapsed with the function button being selected.

A function setting method for a mobile terminal device according to a second exemplary aspect of this invention includes, in the following order: a displaying step of displaying, on a display unit, a function button to which a predetermined function is assigned; and a function execution step of executing, by a control unit, the predetermined function assigned to the function button after a time period equal to or longer than a fixed time period has elapsed with the function button being selected.

A recording medium according to a third exemplary aspect of this invention has recorded thereon a function setting program to be executed by a computer of a mobile terminal device, the function setting program causing the computer to execute, in the following order: a displaying processing for displaying a function button to which a predetermined function is assigned on a display unit; and a function execution processing for executing the predetermined function assigned to the function button after a time period equal to or longer than a fixed time period has elapsed with the function button being selected.

According to this invention, it is possible to change the on/off or setting of the function of the mobile terminal device with a small number of operations.

### Brief Description of the Drawings

Fig. 1 is a block diagram illustrating an example of a mobile terminal device according to a first exemplary embodiment of this invention;
Fig. 2 is a flowchart illustrating an example of a function setting method for a mobile terminal device according to the first exemplary embodiment of this invention;
Fig. 3 is a flowchart illustrating an example of a function setting program for a mobile terminal device that is recorded on a recording medium according to the first exemplary embodiment of this invention and which is to be executed by a computer;
Fig. 4 is a block diagram illustrating an example of a mobile terminal device according to a second exemplary embodiment of this invention;
Fig. 5 is a block diagram illustrating an example of a mobile terminal device according to a third exemplary embodiment of this invention;
Fig. 6 is a flowchart illustrating control of a dedicated function setting menu;
Fig. 7 is a state transition diagram at a time of using the dedicated function setting menu, in which part (a) illustrates a screen of a setting value "a", part (b) illustrates a screen on which a function button is displayed, part (c) illustrates a screen for confirming a setting value "b", and part (d) illustrates a screen of the setting value "b"; and
Fig. 8 is a state transition diagram illustrating operations within the dedicated function setting menu, in which part (a) illustrates a screen on which the setting value "a" is selected and part (b) illustrates a screen of on which the setting value "b" is selected.

### Mode for Embodying the Invention

Embodiments of this invention are described with reference to the accompanying drawings. The embodiments described below are examples for carrying out this invention, and this invention is not limited to the following embodiments. Note that, components having the same reference symbol in the present description and drawings are assumed to both have the same function.

### (First exemplary embodiment)

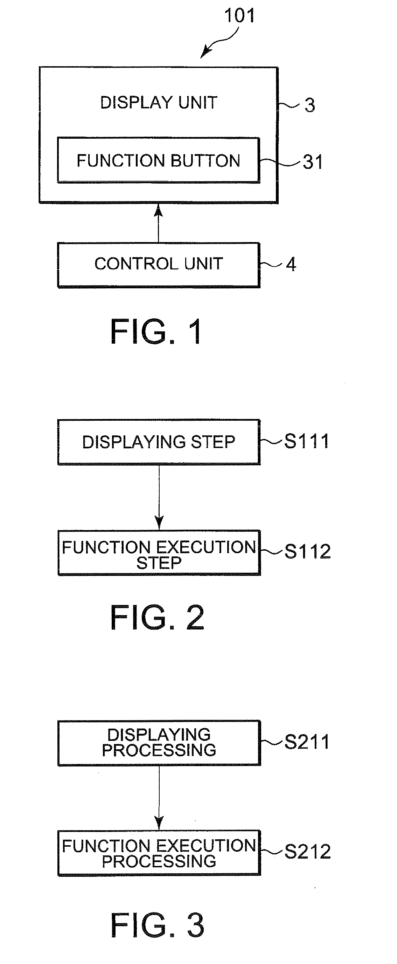

Fig. 1 is a block diagram illustrating an example of a mobile terminal device according to a first exemplary embodiment of this invention. A mobile terminal device 101 according to the first exemplary embodiment of this invention comprises a display unit 3 and a control unit 4. The display unit 3 displays a function button 31 to which a predetermined function is assigned. The control unit 4 executes the function assigned to the function button 31 after a time period equal to or longer than a fixed time period has elapsed with the function button 31 being selected. By selecting the function button 31, it is possible to automatically execute the function assigned to the function button 31. For this reason, the mobile terminal device 101 enables on/off or setting of the function of the mobile terminal device 101 to be changed with a small number of operations.

The mobile terminal device 101 executes a function setting method for a mobile terminal device according to the first exemplary embodiment of this invention. Fig. 2 is a flowchart illustrating an example of the function setting method for the mobile terminal device according to the first exemplary embodiment. The function setting method for the mobile terminal device according to the first exemplary embodiment of this invention includes a displaying step S111 and a function execution step S 112 in the state order.

In the displaying step S111, the function button 31 to which the predetermined function is assigned is displayed on the display unit 3. In the function execution step S112, the control unit 4 executes the function assigned to the function button 31 after the time period equal to or longer than the fixed time period has elapsed with the function button 31 being selected. By selecting the function button 31, it is possible to automatically execute the function assigned to the function button 31. For this reason, by executing the function setting method for the mobile terminal device according to the first exemplary embodiment of this invention, it is possible to change the on/off or setting of the function of the mobile terminal device 101 with a small number of operations.

Here, the fixed time period is not limited, and can be set to, for example, 3 seconds. The fixed time period may be set depending on the function assigned to the function button 31.

A first function assigned to the function button 31 is, for example, on or off of an anti-snooping function for the display unit 3. The anti-snooping function for the display unit 3 can be quickly turned off in order to show a photograph displayed on the display unit 3 to a plurality of persons simultaneously.

A second function assigned to the function button 31 is, for example, on or off of a manner mode function. It is possible to quickly switch to a manner mode at a time of riding on a train or a bus.

A third function assigned to the function button 31 is, for example, a brightness of a backlight of the display unit 3. If a remaining amount of a battery becomes short, it is possible to quickly suppress consumption of the battery.

Note that, the mobile terminal device 101 may be realized by causing a computer to execute a function setting program for a mobile terminal device according to the first exemplary embodiment. The function setting program is recorded on a recording medium. Fig. 3 is a flowchart illustrating an example of the function setting program for the mobile terminal device recorded on the recording medium according to the first exemplary embodiment. The function setting program for the mobile terminal device recorded on the recording medium according to the first exemplary embodiment causes the computer to execute a displaying processing S211 and a function execution processing S212 in the stated order.

In the displaying processing S211, the computer displays the function button 31 to which the predetermined function is assigned on the display unit 3. In the function execution processing S212, the computer executes the function assigned to the function button 31 after the time period equal to or longer than the fixed time period has elapsed with the function button 31 being selected. With this configuration, the mobile terminal device 101 can be realized by using the computer.

### (Second exemplary embodiment)

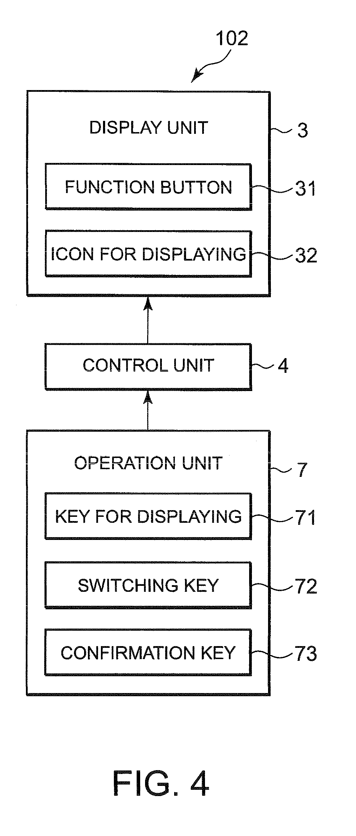

Fig. 4 is a block diagram illustrating an example of a mobile terminal device according to a second exemplary embodiment of this invention. In a mobile terminal device 102 according to the second exemplary embodiment of this invention, an operation unit 7 is added to the mobile terminal device 101 illustrated in Fig. 1, and the display unit 3 and the control unit 4 have new functions described later.

The control unit 4 determines whether or not a function button displaying instruction to display the function button 31 on the display unit 3 has been produced by using a shortcut function. When the function button displaying instruction has been produced by using the shortcut function, the control unit 4 executes the function assigned to the function button 31 after the time period equal to or longer than the fixed time period has elapsed with the function button 31 being selected. On the other hand, when the function button displaying instruction has been produced without using the shortcut function, the control unit 4 avoids executing the function assigned to the function button 31 even after the time period equal to or longer than the fixed time period has elapsed with the function button 31 being selected. With this configuration, it is possible to prevent the on/off or setting of the function of the mobile terminal device 102 from being changed with ease.

In this case, in the function execution step S112 illustrated in Fig. 2, the control unit 4 performs the following operation. The control unit 4 first determines whether or not the function button displaying instruction to display the function button 31 on the display unit 3 has been produced by using the shortcut function. When the function button displaying instruction has been produced by using the shortcut function, the control unit 4 executes the function assigned to the function button 31 after the time period equal to or longer than the fixed time period has elapsed with the function button 31 being selected. On the other hand, when the function button displaying instruction has been produced without using the shortcut function, the control unit 4 avoids executing the function assigned to the function button 31 even after the time period equal to or longer than the fixed time period has elapsed with the function button 31 being selected. With this configuration, it is possible to prevent the on/off or setting of the function of the mobile terminal device 102 from being changed with ease.

With regard to the function button displaying instruction to display the function button 31 on the display unit 3, there are a case of being produced by using a normal function and a case of being produced by using the shortcut function. In the case of being produced by using the normal function, for example, selection is made from a function setting menu for the entire mobile terminal device 102. In the case of being produced by using the shortcut function, there are, for example, a case of displaying an icon 32 for displaying on a desktop screen of the display unit 3 and a case where the operation unit 7 includes a key 71 for displaying.

In the case of displaying the icon 32 for displaying on the desktop screen of the display unit 3, the icon 32 for displaying is assigned an output function for the function button displaying instruction for instructing to display the function button 31. In this case, when the icon 32 for displaying is clicked on, the control unit 4 displays the function button 31 on the display unit 3. Then, the control unit 4 determines that the function button displaying instruction has been produced by using the shortcut function based on the fact that the icon 32 for displaying has been clicked on.

In this case, in the displaying step S111 illustrated in Fig. 2, when the icon 32 for displaying, which is displayed on the desktop screen and to which the output function for the function button displaying instruction is assigned, is clicked on, the control unit 4 displays the function button 31 on the display unit 3. Then, in the function execution step S112, the control unit 4 determines that the function button displaying instruction has been produced by using the shortcut function based on the fact that the icon 32 for displaying has been clicked on.

In the case where the operation unit 7 includes the key 71 for displaying, the key 71 for displaying is assigned the output function for the function button displaying instruction for instructing to display the function button 31. In this case, when the key 71 for displaying is depressed, the control unit 4 displays the function button 31 on the display unit 3. Then, the control unit 4 determines that the function button displaying instruction has been produced by using the shortcut function based on the fact that the key 71 for displaying has been depressed.

In this case, in the displaying step S111 illustrated in Fig. 2, when the key 71 for displaying, to which the output function for the function button displaying instruction is assigned, is depressed, the control unit 4 displays the function button 31 on the display unit 3. Meanwhile, in the function execution step S112, the control unit 4 determines that the function button displaying instruction has been produced by using the shortcut function based on the fact that the key 71 for displaying has been depressed.

The function button 31 may be associated with a predetermined switching key 72. In this case, each time the switching key 72 is depressed, the control unit 4 changes the function assigned to the function button 31.

In this case, in the function execution step S 112 illustrated in Fig. 2, each time the switching key 72 previously associated with the function button 31 is depressed, the control unit 4 changes the function assigned to the function button 31.

The function button 31 may be associated with a predetermined confirmation key 73. In this case, the control unit 4 performs execution of the function assigned to the function button after the confirmation key 73 has been kept depressed for a time period equal to or longer than the fixed time period.

In this case, in the function execution step S 112 illustrated in Fig. 2, the control unit 4 executes the function assigned to the function button 31 after the confirmation key 73 previously associated with the function button 31 has been kept depressed for the time period equal to or longer than the fixed time period.

Note that, the mobile terminal device 102 may be realized by causing the computer to execute the function setting program for the mobile terminal device according to the second exemplary embodiment. The function setting program is recorded on the recording medium. In this case, the function setting program for the mobile terminal device recorded on the recording medium, which is illustrated in Fig. 3, causes the computer to execute the following processing. With this configuration, the mobile terminal device 102 can be realized by using the computer.

In the function execution processing S212 illustrated in Fig. 3, the computer performs an operation described below. The computer first determines whether or not the function button displaying instruction to display the function button 31 on the display unit 3 has been produced by using the shortcut function. When the function button displaying instruction has been produced by using the shortcut function, the computer executes the function assigned to the function button 31 after the time period equal to or longer than the fixed time period has elapsed with the function button 31 being selected. When the function button displaying instruction has been produced without using the shortcut function, the computer avoids executing the function assigned to the function button 31 even after the time period equal to or longer than the fixed time period has elapsed with the function button 31 being selected.

In the displaying processing S211 illustrated in Fig. 3, when the icon 32 for displaying, which is displayed on the desktop screen and to which the output function for the function button displaying instruction is assigned, is clicked on, the computer displays the function button 31 on the display unit 3. Then, in the function execution processing S212, the computer determines that the function button displaying instruction has been produced by using the shortcut function based on the fact that the icon 32 for displaying has been clicked on.

In the displaying processing S211 illustrated in Fig. 3, when the key 71 for displaying, to which the output function for the function button displaying instruction is assigned, is depressed, the computer displays the function button 31 on the display unit 3. Then, in the function execution processing S212, the computer determines that the function button displaying instruction has been produced by using the shortcut function based on the fact that the key 71 for displaying has been depressed.

In the function execution processing S212 illustrated in Fig. 3, each time the switching key 72 previously associated with the function button 31 is depressed, the computer changes the function assigned to the function button 31.

In the function execution processing S212 illustrated in Fig. 3, the computer executes the function assigned to the function button 31 after the confirmation key 73 previously associated with the function button 31 has been kept depressed for the time period equal to or longer than the fixed time period.

### (Third exemplary embodiment)

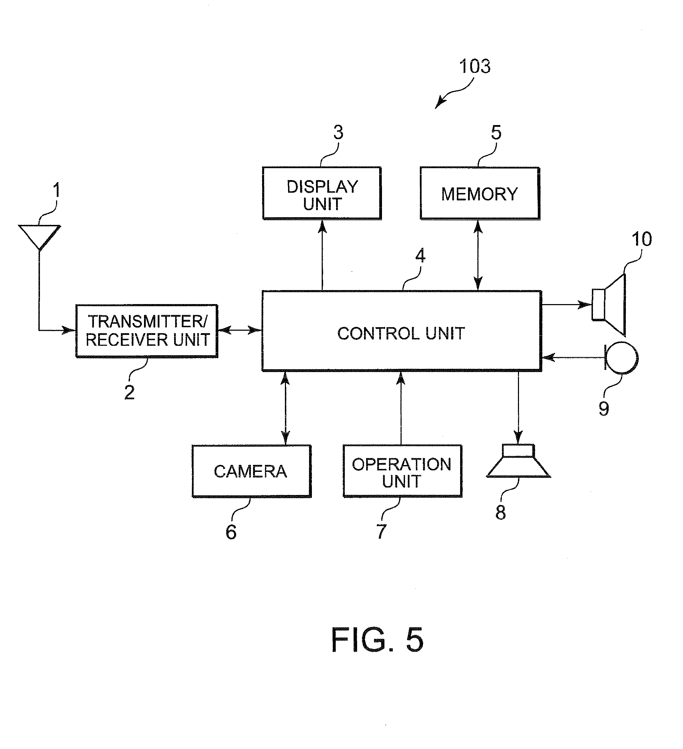

Fig. 5 is a block diagram illustrating an example of a mobile terminal device according to a third exemplary embodiment of this invention. A mobile terminal device 103 comprises an antenna unit 1, a transmitter/receiver unit 2, the display unit 3, the control unit 4, a memory 5, a camera 6, the operation unit 7, a speaker 8, a microphone 9, and a receiver 10.

The antenna unit 1 performs transmission/reception of a radio signal. The transmitter/receiver unit 2 performs modulation/demodulation of an input radio signal and an output radio signal. The receiver 10 functions as a telephone receiver unit of the mobile terminal device 103. The microphone 9 functions as a telephone transmitter unit of the mobile terminal device 103.

The memory 5 stores information for performing setting of the mobile terminal device 103 and various kinds of information for performing communications. The camera 6 captures external information into the mobile terminal device 103. The speaker 8 emits sound of a ringer, an alarm, a voice, and the like.

The display unit 3 performs displaying of the information for performing the setting of the mobile terminal device 103 and the various kinds of information for performing the communications (for example, telephone number, clock, within/out of service, telephone book display, schedule display, calendar display, and current mode). Further, the display unit 3 can also create an icon having a shortcut function for executing a specific function.

The operation unit 7 is a circuit for recognizing an input through a plurality of key buttons and for transmitting the input to the control unit 4. The control unit 4 is capable of distinguishing between a case where the key button of the operation unit 7 is depressed for a short time period (hereinafter, referred to as "short depression") and a case of being depressed for a long time period (hereinafter, referred to as "long depression"). Here, the "long depression" refers to a case where, for example, the key button is depressed for a time period equal to or longer than one second.

The control unit 4 controls functional operations of the transmitter/receiver unit 2, the display unit 3, the memory 5, the camera 6, the operation unit 7, the speaker 8, the microphone 9, and the receiver 10.

The control unit 4 changes the on/off or a setting value of an arbitrary function of the mobile terminal device 103. The function of the mobile terminal device 103 corresponds to, for example, the setting of the anti-snooping function, the setting of the manner mode, backlight brightness setting for the display unit, and the like.

The control unit 4 can display the function setting menu from a normal menu, and can also display a dedicated function setting menu that is displayed by using the shortcut function. The function setting menu displayed from the normal menu and the dedicated function setting may be the same or may be different.

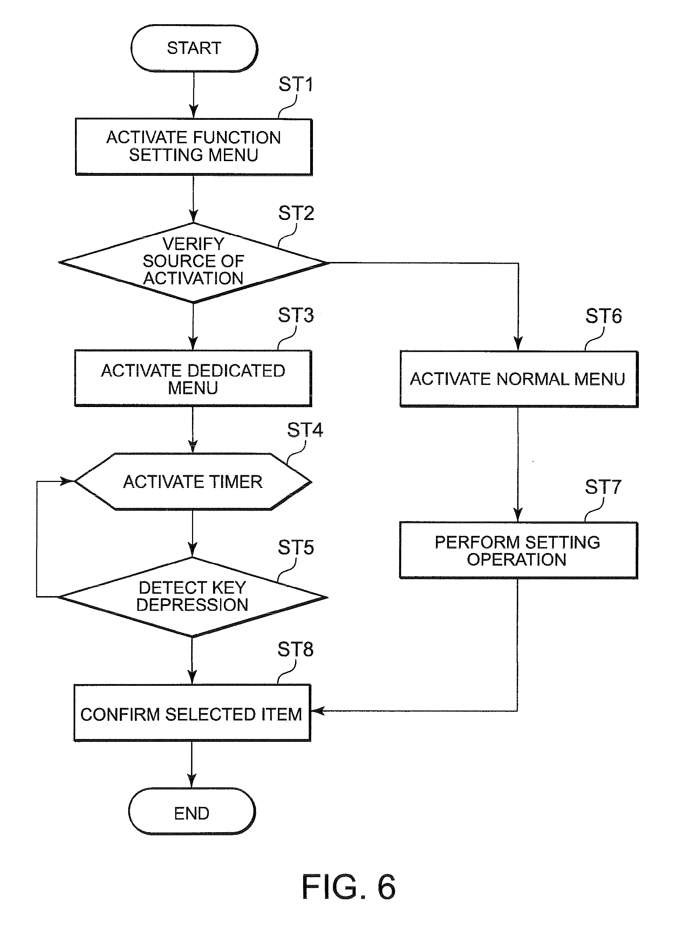

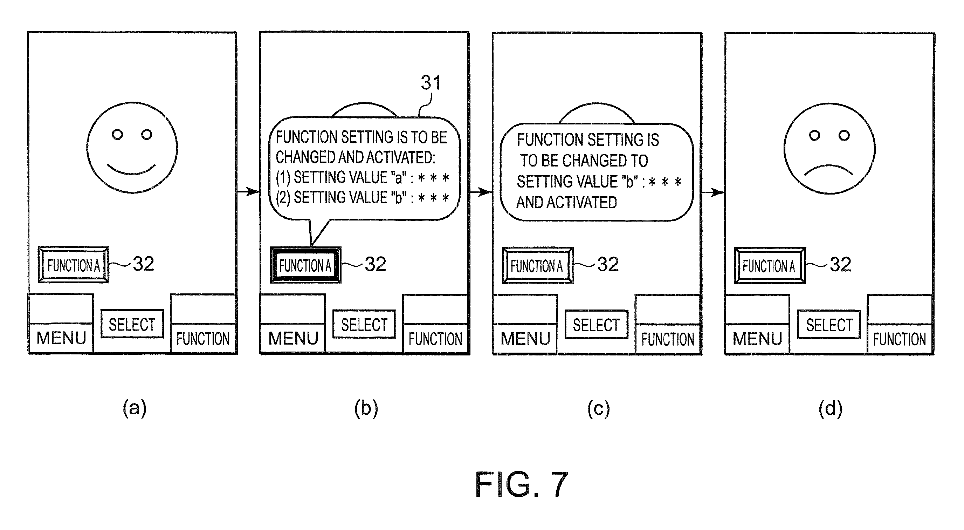

Fig. 6 is a flowchart illustrating control of the dedicated function setting. At a start time point, as illustrated in Fig. 7(a), the display unit 3 displays on the desktop screen the icon 32 for displaying which is used to display the function button 31 for a function A.

In Step ST1, the operation unit 7 clicks on the icon 32 for displaying which is displayed as "FUNCTION A". At this time, the control unit 4 executes Step ST2. In Step ST2, the control unit 4 performs verification of a source of activation. For example, the control unit 4 performs discrimination between the activation from the normal menu and the activation from a shortcut. In the case of the activation from the shortcut on the desktop or the like, the control unit 4 advances to Step ST3, while in the case of the activation from the normal menu, the control unit 4 advances to Step ST6.

In Step ST3, the control unit 4 activates and displays a function setting menu dedicated to the function A. For example, the control unit 4 displays the function button 31 illustrated in Fig. 7(b) on the display unit 3.

Simultaneously with Step ST3, the control unit 4 executes Step ST4. In Step ST4, the control unit 4 activates a timer, and measures a predetermined specific time. The control unit 4 executes Step ST5 within the predetermined specific time. In Step ST5, the control unit 4 monitors the depression of the key included in the operation unit 7. When there is no depression of the key for the specific time, the control unit 4 advances to Step ST8.

In Step ST6, a normal function setting menu for the function A is activated and displayed. In Step ST7, the control unit 4 selects the setting value by a setting operation through the operation unit 7. When a setting value "b" is selected in Step ST7, the control unit 4 advances to Step ST8.

In Step ST8, the control unit 4 confirms the selected item with the setting value focused on the function setting menu.

Next, a description is made of a state transition of the mobile terminal device in accordance with the above-mentioned flow. In Fig. 7, for an easy understanding, the description is directed to an example in which the "function A" represents a function of setting a wallpaper of a screen, a setting value "a" represents a smiling face, and the setting value "b" represents an angry face.

Fig. 7(a) indicates that the function A is set to the setting value "a". The icon 32 for displaying which is used for the shortcut to the function A is disposed on the desktop screen. The operation unit 7 is used to select and click on a shortcut icon for the function A on the desktop screen. Therefore, the activation is performed from the shortcut, and hence the control unit 4 activates the dedicated function setting menu. With this operation, the dedicated function setting menu illustrated in Fig. 7(b) is displayed on the display unit 3. The function button 31 is displayed on the display unit 3 as the dedicated function setting menu.

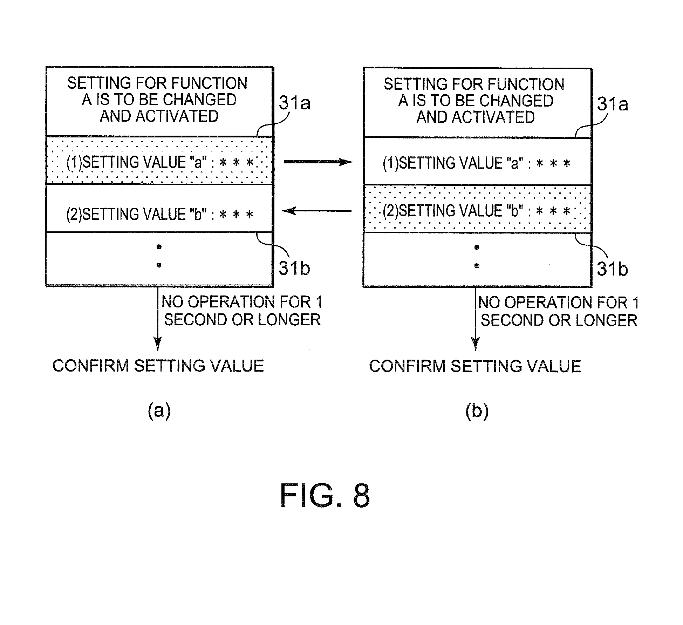

Here, an operation of the dedicated function setting menu is described by referring to Fig. 8. A state in which a function button 31a illustrated in Fig. 8(a) is selected or a state in which a function button 31b illustrated in Fig. 8(b) is selected is displayed depending on a setting state at a time when the dedicated function setting menu is displayed. The state of the function A (setting value "a") is effective in Fig. 7(b), and hence as illustrated in Fig. 8(a), the state in which the function button 31a is selected is displayed. At this time point, if no key operation is performed (here, as an example, the time period equal to or longer than one second is used for the description), the function A is executed with the setting state (setting value "a") as it is. With this operation, screen display returns to Fig. 7(a).

In order to change the setting value, by depressing the key included in the operation unit 7, the cursor is caused to move to advance the state to Fig. 8(b). The key included in the operation unit 7 may be a cursor key or may be a predetermined switching key. The key used for the selection (such as selection key or specific key to which a function is allocated) or the key used to perform the selection (such as direction key) is operated to select the setting value. In a case of operating a single key, the cursor is caused to move one at a time of depression to select the setting value. With this operation, the setting value "a" or the setting value "b" is selected as illustrated in Fig. 8(a) or Fig. 8(b).

In a case where the operation is stopped at a time point when the cursor moves to the setting value "b" to which a change is to be made while avoiding a further key operation, the control unit 4 changes the setting value to the setting value "b" and executes the function A. With this operation, the screen display is changed to Fig. 7(d). In the case of confirming the selected item, as illustrated in Fig. 7(c), the control unit 4 may notify the user on the display unit 3 that the setting has been changed and the function A is to be executed. In this case, after the notification is completed, the control unit 4 executes the function A (setting value "b").

As a method of confirming the setting value, in the case of operating the single key, the control unit 4 confirms the selected item when a time during which no operation is performed is equal to or longer than the fixed time period. Even in a case where the selection is made through a plurality of keys, the control unit 4 confirms the selected item similarly when the time during which no operation is performed is equal to or longer than the fixed time period.

In this manner, the same operation as a conventional on/off function is realized by confirming the selection without an operation. That is, to perform the on/off of the function without performing setting, the setting can be changed in addition to the on/off of the function by selecting and displaying a desktop icon. With this configuration, which realizes the change of the setting value and the function execution (function on/off), it is possible to easily widen the user's usage patterns. In addition, a function setting method with improved convenience can be provided with the enabled application to the allocation of a function to an operation key for performing an input of the telephone number or the like or a dedicated key to which a specific function is allocated.

Further, by previously assigning a function to a single key such as the key for displaying, the switching key, or the confirmation key, it is possible to perform an operation through the key that is placed on the side of a casing or the like. With this configuration, even in a case where the operation unit is extremely reduced due to a change in shape of the mobile terminal device (for example, the operation unit is hidden as in a folding type or a sliding type), it is possible to easily perform the change of the setting in addition to the on/off of the function.

More specific aspects of this invention are described.

In the mobile terminal device according to the above-mentioned first exemplary aspect, the above-mentioned control unit may determine whether or not the function button displaying instruction to display the above-mentioned function button on the above-mentioned display unit has been produced by using the shortcut function. In this situation, in the case of being produced by using the shortcut function, the above-mentioned control unit executes the function assigned to the above-mentioned function button after the time period equal to or longer than the fixed time period has elapsed with the above-mentioned function button being selected. On the other hand, in the case of being produced without using the shortcut function, the above-mentioned control unit avoids executing the function assigned to the above-mentioned function button even after the time period equal to or longer than the fixed time period has elapsed with the above-mentioned function button being selected. The above-mentioned display unit may display on the desktop screen the icon for displaying to which the output function for the above-mentioned function button displaying instruction is assigned. In this case, when the above-mentioned icon for displaying is clicked on, the above-mentioned control unit displays the above-mentioned function button on the above-mentioned display unit, and determines that the above-mentioned function button displaying instruction has been produced by using the shortcut function based on the fact that the above-mentioned icon for displaying has been clicked on. The mobile terminal device may include the key for displaying to which the output function for the above-mentioned function button displaying instruction is assigned. In this case, when the above-mentioned key for displaying is depressed, the above-mentioned control unit displays the above-mentioned function button on the above-mentioned display unit, and determines that the above-mentioned function button displaying instruction has been produced by using the shortcut function based on the fact that the above-mentioned key for displaying has been depressed. The above-mentioned function button may be associated with the predetermined switching key. In this case, the above-mentioned control unit changes the function assigned to the above-mentioned function button each time the above-mentioned switching key is depressed. The above-mentioned function button may be associated with the predetermined confirmation key. In this case, the above-mentioned control unit performs the execution of the function assigned to the above-mentioned function button after the above-mentioned confirmation key has been kept depressed for the time period equal to or longer than the fixed time period. The first function assigned to the above-mentioned function button may be the on or off of the anti-snooping function of the above-mentioned display unit. The second function assigned to the above-mentioned function button may be the on or off of the manner mode function. The third function assigned to the above-mentioned function button may be the brightness of the backlight of the above-mentioned display unit.

In the function setting method for the mobile terminal device according to the above-mentioned second exemplary aspect, in above-mentioned the function execution step, the above-mentioned control unit may determine whether or not the function button displaying instruction to display the above-mentioned function button on the above-mentioned display unit has been produced by using the shortcut function. In this situation, in the case of being produced by using the shortcut function, the above-mentioned control unit executes the function assigned to the above-mentioned function button after the time period equal to or longer than the fixed time period has elapsed with the above-mentioned function button being selected. On the other hand, in the case of being produced without using the shortcut function, the above-mentioned control unit avoids executing the function assigned to the above-mentioned function button even after the time period equal to or longer than the fixed time period has elapsed with the above-mentioned function button being selected. In the above-mentioned displaying step, when the icon for displaying, which is displayed on the desktop screen and to which the output function for the above-mentioned function button displaying instruction is assigned, is clicked on, the above-mentioned control unit may display the above-mentioned function button on the above-mentioned display unit. In this case, in the above-mentioned function execution step, the above-mentioned control unit may determine that the above-mentioned function button displaying instruction has been produced by using the shortcut function based on the fact that the above-mentioned icon for displaying has been clicked on. In the above-mentioned displaying step, when the key for displaying, to which the output function for the above-mentioned function button displaying instruction is assigned, is depressed, the above-mentioned control unit may display the above-mentioned function button on the above-mentioned display unit. In this case, in the above-mentioned function execution step, the above-mentioned control unit determines that the above-mentioned function button displaying instruction has been produced by using the shortcut function based on the fact that the above-mentioned key for displaying has been depressed. In the above-mentioned function execution step, each time the switching key previously associated with the above-mentioned function button is depressed, the above-mentioned control unit may change the function assigned to the above-mentioned function button. In the above-mentioned function execution step, the above-mentioned control unit may perform the execution of the function assigned to the above-mentioned function button after the confirmation key previously associated with the above-mentioned function button has been kept depressed for the time period equal to or longer than the fixed time period. The first function assigned to the above-mentioned function button may be the on or off of the anti-snooping function of the above-mentioned display unit. The second function assigned to the above-mentioned function button may be the on or off of the manner mode function. The third function assigned to the above-mentioned function button may be the brightness of the backlight of the above-mentioned display unit.

In the recording medium according to the above-mentioned third exemplary aspect, in the above-mentioned function execution step, the above-mentioned computer may determine whether or not the function button displaying instruction to display the above-mentioned function button on the above-mentioned display unit has been produced by using the shortcut function. In this situation, in the case of being produced by using the shortcut function, the above-mentioned computer executes the function assigned to the above-mentioned function button after the time period equal to or longer than the fixed time period has elapsed with the above-mentioned function button being selected. On the other hand, in the case of being produced without using the shortcut function, the above-mentioned computer avoids executing the function assigned to the above-mentioned function button even after the time period equal to or longer than the fixed time period has elapsed with the above-mentioned function button being selected. In the above-mentioned displaying processing, when the icon for displaying, which is displayed on the desktop screen and to which the output function for the above-mentioned function button displaying instruction is assigned, is clicked on, the above-mentioned computer may display the above-mentioned function button on the above-mentioned display unit. In this case, in the above-mentioned function execution processing, the above-mentioned computer determines that the above-mentioned function button displaying instruction has been produced by using the shortcut function based on the fact that the above-mentioned icon for displaying has been clicked on. In the above-mentioned displaying processing, when the key for displaying, to which the output function for the above-mentioned function button displaying instruction is assigned, is depressed, the above-mentioned computer may display the abode-mentioned function button on the above-mentioned display unit. In this case, in the above-mentioned function execution processing, the above-mentioned computer determines that the above-mentioned function button displaying instruction has been produced by using the shortcut function based on the fact that the above-mentioned key for displaying has been depressed. In the above-mentioned function execution processing, each time the switching key previously associated with the above-mentioned function button is depressed, the above-mentioned computer may change the function assigned to the above-mentioned function button. In the above-mentioned function execution processing, the above-mentioned computer may perform the execution of the function assigned to the above-mentioned function button after the confirmation key previously associated with the above-mentioned function button has been kept depressed for the time period equal to or longer than the fixed time period. The first function assigned to the above-mentioned function button may be the on or off of the anti-snooping function of the above-mentioned display unit. The second function assigned to the above-mentioned function button may be the on or off of the manner mode function. The third function assigned to the above-mentioned function button may be the brightness of the backlight of the above-mentioned display unit.

While the invention has been particularly shown and described with reference to exemplary embodiments thereof, the invention is not limited to these embodiments. It will be understood by those of ordinary skill in the art that various changes in form and details may be made therein without departing from the sprit and scope of the present invention as defined by the claims.

### Industrial Applicability

This invention can be applied to the information and communication industry.

This application is based upon and claims the benefit of priority from Japanese Patent Application No. 2009-274891, filed on December 2, 2009, the disclosure of which is incorporated herein in its entirety by reference.

## Claims

1. A mobile terminal device, comprising:
a display unit for displaying a function button to which a predetermined function is assigned; and
a control unit for executing the predetermined function assigned to the function button after a time period equal to or longer than a fixed time period has elapsed with the function button being selected.

2. A mobile terminal device according to claim 1, wherein:
the control unit determines whether or not a function button displaying instruction to display the function button on the display unit has been produced by using a shortcut function;
the control unit executes, in a case of being produced by using the shortcut function, the predetermined function assigned to the function button after the time period equal to or longer than the fixed time period has elapsed with the function button being selected; and
the control unit avoids, in a case of being produced without using the shortcut function, executing the predetermined function assigned to the function button even after the time period equal to or longer than the fixed time period has elapsed with the function button being selected.

3. A mobile terminal device according to claim 2, wherein:
the display unit displays on a desktop screen an icon for displaying to which an output function for the function button displaying instruction is assigned; and
the control unit is configured to:
display the function button on the display unit when the icon for displaying is clicked on; and
determine that the function button displaying instruction has been produced by using the shortcut function based on a fact that the icon for displaying has been clicked on.

4. A mobile terminal device according to claim 2 or 3, further comprising a key for displaying to which an output function for the function button displaying instruction is assigned,
wherein the control unit is configured to:
display the function button on the display unit when the key for displaying is depressed; and
determine that the function button displaying instruction has been produced by using the shortcut function based on a fact that the key for displaying has been depressed.

5. A mobile terminal device according to any one of claims 1 to 4, wherein:
the function button is associated with a predetermined switching key; and
the control unit changes the predetermined function assigned to the function button each time the switching key is depressed.

6. A mobile terminal device according to any one of claims 1 to 5, wherein:
the function button is associated with a predetermined confirmation key; and
the control unit performs execution of the predetermined function assigned to the function button after the predetermined confirmation key has been kept depressed for a time period equal to or longer than the fixed time period.

7. A mobile terminal device according to any one of claims 1 to 6, wherein a first function assigned to the function button comprises on or off of an anti-snooping function of the display unit.

8. A mobile terminal device according to any one of claims 1 to 7, wherein a second function assigned to the function button comprises on or off of a manner mode function.

9. A mobile terminal device according to any one of claims 1 to 8, wherein a third function assigned to the function button comprises a brightness of a backlight of the display unit.

10. A function setting method for a mobile terminal device, comprising, in the following order:
a displaying step of displaying, on a display unit, a function button to which a predetermined function is assigned; and
a function execution step of executing, by a control unit, the predetermined function assigned to the function button after a time period equal to or longer than a fixed time period has elapsed with the function button being selected.

11. A function setting method for a mobile terminal device according to claim 10, wherein the function execution step comprises:
determining, by the control unit, whether or not a function button displaying instruction to display the function button on the display unit has been produced by using a shortcut function;
executing, by the control unit, in a case of being produced by using the shortcut function, the predetermined function assigned to the function button after the time period equal to or longer than the fixed time period has elapsed with the function button being selected; and
avoiding, by the control unit, in a case of being produced without using the shortcut function, executing the predetermined function assigned to the function button even after the time period equal to or longer than the fixed time period has elapsed with the function button being selected.

12. A function setting method for a mobile terminal device according to claim 11, wherein:
the displaying step comprises displaying, by the control unit, the function button on the display unit when an icon for displaying, which is displayed on a desktop screen and to which an output function for the function button displaying instruction is assigned, is clicked on; and
the function execution step comprises determining, by the control unit, that the function button displaying instruction has been produced by using the shortcut function based on a fact that the icon for displaying has been clicked on.

13. A function setting method for a mobile terminal device according to claim 11 or 12, wherein:
the displaying step comprises displaying, by the control unit, the function button on the display unit when a key for displaying, to which an output function for the function button displaying instruction is assigned, is depressed; and
the function execution step comprises determining, by the control unit, that the function button displaying instruction has been produced by using the shortcut function based on a fact that the key for displaying has been depressed.

14. A function setting method for a mobile terminal device according to any one of claims 10 to 13, wherein the function execution step comprises changing, by the control unit, the predetermined function assigned to the function button each time a switching key previously associated with the function button is depressed.

15. A function setting method for a mobile terminal device according to any one of claims 10 to 14, wherein the function execution step comprises performing, by the control unit, execution of the predetermined function assigned to the function button after a confirmation key previously associated with the function button has been kept depressed for a time period equal to or longer than the fixed time period.

16. A function setting method for a mobile terminal device according to any one of claims 10 to 15, wherein a first function assigned to the function button comprises on or off of an anti-snooping function of the display unit.

17. A function setting method for a mobile terminal device according to any one of claims 10 to 16, wherein a second function assigned to the function button comprises on or off of a manner mode function.

18. A function setting method for a mobile terminal device according to any one of claims 10 to 17, wherein a third function assigned to the function button comprises a brightness of a backlight of the display unit.

19. A recording medium having recorded thereon a function setting program to be executed by a computer of a mobile terminal device,
the function setting program causing the computer to execute, in the following order:
a displaying processing for displaying a function button to which a predetermined function is assigned on a display unit; and
a function execution processing for executing the predetermined function assigned to the function button after a time period equal to or longer than a fixed time period has elapsed with the function button being selected.

20. A recording medium according to claim 19, wherein the function execution processing comprises:
determining, by the computer, whether or not a function button displaying instruction to display the function button on the display unit has been produced by using a shortcut function;
executing, by the computer, in a case of being produced by using the shortcut function, the predetermined function assigned to the function button after the time period equal to or longer than the fixed time period has elapsed with the function button being selected; and
avoiding, by the computer, in a case of being produced without using the shortcut function, executing the predetermined function assigned to the function button even after the time period equal to or longer than the fixed time period has elapsed with the function button being selected.

21. A recording medium according to claim 20, wherein:
the displaying processing comprises displaying, by the computer, the function button on the display unit when an icon for displaying, which is displayed on a desktop screen and to which an output function for the function button displaying instruction is assigned, is clicked on; and
the function execution processing comprises determining, by the computer, that the function button displaying instruction has been protruded by using the shortcut function based on a fact that the icon for displaying has been clicked on.

22. A recording medium according to claim 20 or 21, wherein:
the displaying processing comprises displaying, by the computer, the function button on the display unit when a key for displaying, to which an output function for the function button displaying instruction is assigned, is depressed; and
the function execution processing comprises determining, by the computer, that the function button displaying instruction has been produced by using the shortcut function based on a fact that the key for displaying has been depressed.

23. A recording medium according to any one of claims 19 to 22, wherein the function execution processing comprises changing, by the computer, the predetermined function assigned to the function button each time a switching key previously associated with the function button is depressed.

24. A recording medium according to any one of claims 19 to 23, wherein the function execution processing comprises performing, by the computer, execution of the predetermined function assigned to the function button after a confirmation key previously associated with the function button has been kept depressed for a time period equal to or longer than the fixed time period.

25. A recording medium according to any one of claims 19 to 24, wherein a first function assigned to the function button comprises on or off of an anti-snooping function of the display unit.

26. A recording medium according to any one of claims 19 to 25, wherein a second function assigned to the function button comprises on or off of a manner mode function.

27. A recording medium according to any one of claims 19 to 26, wherein a third function assigned to the function button comprises a brightness of a backlight of the display unit.
